# EUROPÄISCHE PATENTANMELDUNG

(11) **EP 0 836 345 A2**
(43) Veröffentlichungstag der Anmeldung: **15.04.1998**
(21) Anmeldenummer: 97114085.0
(22) Anmeldetag: 14.08.1997
(51) Int. Cl.: H04Q 11/04, H04Q 3/00

(54) **Intelligentes Netz zur Vermittlung von breitbandigen Diensten**

(30) Priorität: 23.08.1996 DE 19634132
(71) Anmelder: SIEMENS AKTIENGESELLSCHAFT, 80333 München (DE)
(72) Erfinder: Van der Vekens, Alexander, 81373 München (DE)

(57) **Zusammenfassung**

An einen Breitbanddienste durchschaltefähigen Vermittlungsknoten ist ein Dienstesteuerungspunkt über eine Schnittstelle angeschlossen, die gleichartig mit einer Schnittstelle zum Anschluß einer Teilnehmerendeinrichtung an den Vermittlungsknoten ist. Die Anschließbarkeit eines auch räumlich entfernt angeordneten Dienstesteuerungspunktes an den Vermittlungsknoten über ohnehin vorhandene, genormte Verbindungsstrecken bringt eine einfache Erweiterbarkeit des Vermittlungsknotens um die Funktionalität von Intelligenten Netzen mit sich.

In einem Vermittlungsnetz, das die Durchschaltung von Breitbanddiensten unterstützt, ist in einem Vermittlungsknoten die Rufsteuerungsfunktion CCF und die Dienstedurchschaltefunktion SSF in getrennten Einheiten, die durch eine Schnittstelle miteinander verbunden sind, angeordnet. Diese Anordnung bringt eine einfache und aufwandarme Implementierung von Breitband-Intelligente-Netze-Diensten in das Vermittlungssystem mit sich.

## Beschreibung

Die Erweiterung von Wählvermittlungsnetzen um die Funktionalität von Intelligenten Diensten führt zu sogenannten Intelligenten Netzen IN, bei denen ein von einer beliebigen Teilnehmerendeinrichtung abgehender Intelligente-Dienste-Ruf nach Maßgabe des Anbieters (provider) des Intelligenten Dienstes der Aufbau einer mehr oder weniger komplexen Verbindungskonfiguration angestoßen wird. In einem einfachen Fall ist die Funktionalität eines Intelligenten Dienstes im wesentlichen durch eine Rufnummernumwertung gegeben, wobei in Abhängigkeit zum Beispiel von Tageszeit und Ort des abgehenden Rufes zu einer bestimmten Empfangsstelle durchgeschaltet wird. Als Beispiele für Intelligente-Netze-Dienste seien genannt:
Verbindungen, die für die rufende Teilnehmerendeinrichtung gebührenfrei sind (im Vermittlungsnetz der Deutschen Telekom 0130er Rufnummern),
Verbindungen, bei denen die rufende Teilnehmerendeinrichtung unabhängig von der Entfernung und der Tageszeit mit den Gebühren für ein entsprechendes Ortsgespräch belastet wird (im Vermittlungsnetz der Deutschen Telekom 0180er Rufnummern) oder
Verbindungen mit einer besonderen Dienstleistung, bei denen die rufende Teilnehmerendeinrichtung mit Gebühren für ein entsprechendes Ortsgespräch belastet wird (im Vermittlungsnetz der Deutschen Telekom 0180er Rufnummern).
Das Vermittlungsnetz möge in digitalisierter Form vorliegende Daten in Nachrichtenzellen fester Länge nach einem asynchronen Übertragungsverfahren, vorzugsweise nach dem ATM(Asynchronous Transfer Mode) - Übertragungsverfahren weiterleiten.

Der Anmeldungsgegenstand betrifft ein Vermittlungssystem zur Anwahl eines Intelligente-Netze-Dienstes, insbesondere Breitbanddienstes, durch eine Teilnehmerendeinrichtung bei dem ein eine Rufsteuerungsfunktion (CCF) und eine Dienstedurchschaltefunktion (SSF) aufweisender Vermittlungsknoten (SSP) mit einem Dienstesteuerungspunkt (SCP), der eine einen Intelligenten Dienst realisierende Dienstesteuerungsfunktion (SCF) aufweist, verbunden ist und bei dem eine Teilnehmerendeinrichtung über eine gegebene Schnittstelle mit dem Vermittlungsknoten verbunden ist.

Ein Vermittlungssystem mit den angegebenen Merkmalen ist aus der ITU-T (Telecommunication Standardization Sector Of International Telecommunication Union) Recommendation Q121* bekannt. Diese Recommendation gibt für Intelligente Dienste in Schmalbandnetzen Empfehlungen auf der Ebene von Funktionsmodellen.

Gemäß dem ITU-T Standard Q 1208 ist die Schnittstelle zwischen Vermittlungsknoten (SSP) und Dienstesteuerungspunkt (SCP) eine NNI(Network-Node-Interface)-Schnittstelle, also eine netzwerkinterne Schnittstelle hoher Komplexität.

Dem Anmeldungsgegenstand liegt das Problem zugrunde, ein Vermittlungssystem, insbesondere auch ein Vermittlungssystem zur Durchschaltung von Breitbanddiensten, zu schaffen, das mit einem geringen Aufwand um die Funktionalität von Intelligenten Diensten erweiterbar ist.

Das Problem wird bei dem Vermittlungssystem mit den angegebenen Merkmalen dadurch gelöst, daß die Schnittstelle zwischen Vermittlungsknoten und Dienstesteuerungspunkt gleichartig zu der Schnittstelle zwischen der Teilnehmerendeinrichtung und dem Vermittlungsknoten ist.

Die Anschließbarkeit eines Dienstesteuerungspunktes über eine definierte Schnittstelle bringt eine einfache Erweiterbarkeit eines Vermittlungsknotens, der bislang nicht Intelligente Dienste fähig ist, um die Funktionalität einer Fähigkeit zur Abwicklung von Intelligenten Diensten mit sich. Der Aufwand an Änderungen in einem Vermittlungsknoten, der bislang noch keine Funktionalität von Intelligenten Diensten aufweist, für das Einfügen der Schnittstelle kann gering gehalten werden. Der Dienstesteuerungspunkt kann räumlich entfernt von dem Vermittlungsknoten angeordnet werden, wobei eine Verbindung zwischen dem Vermittlungsknoten und dem Dienstesteuerungspunkt über eine Leitung und deren Leitungsabschlußeinrichtungen erfolgen kann, wie sie ohnehin in großer Zahl zum Anschluß von peripheren (Teilnehmerend-)Einrichtungen an den Vermittlungsknoten herangeführt sind.

Die abhängigen Ansprüche beziehen sich auf vorteilhafte Weiterbildungen des Ahmeldungsgegenstandes.

Der Anmeldungsgegenstand wird im folgenden als Ausführungsbeispiel in einem zum Verständnis erforderlichen Umfang anhand von Zeichnungen näher beschrieben. Dabei zeigen:
Fig 1 eine prinzipielle Darstellung eines Vermittlungsnetzes mit einem Vermittlungsknoten SSP 1, an den eine Teilnehmerendeinrichtung TE und ein Dienstesteuerungspunkt SCP angeschlossen sind,
Fig 2 ein Objekt-Diagramm für das Objekt Modell der in Fig 1 in dem Vermittlungsknoten dargestellten Dienstedurchschaltefunktion SSF,
Fig 3 einen zeitlichen Abfolgeplan am Beispiel eines Aufbaus eines IN-Rufes und
Fig 4 einen zeitlichen Abfolgeplan am Beispiel einer Auslösung eines IN-Rufes.

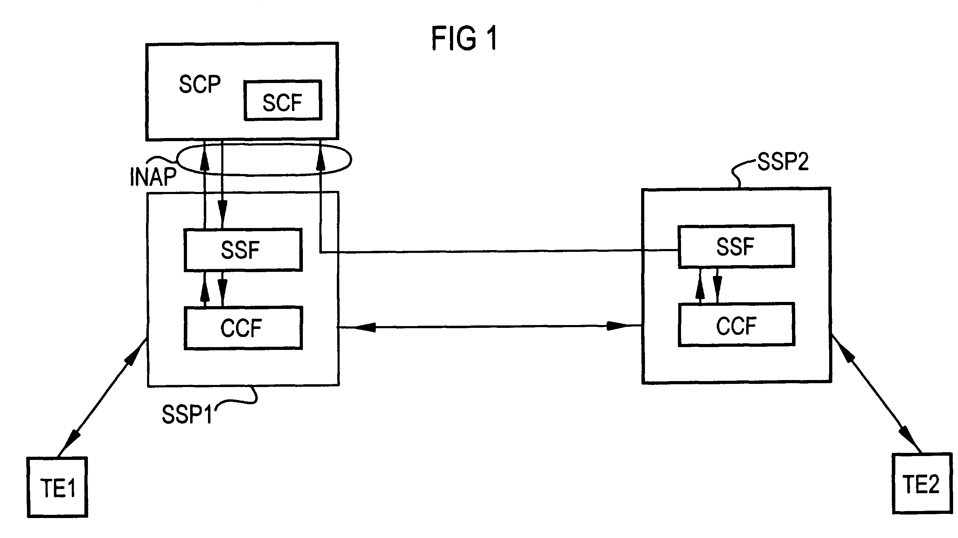

Fig 1 zeigt ein IN-Vermittlungsnetz (Intelligente Dienste Netz, Intelligent Network), bei dem ein lokaler Vermittlungsknoten SSP 1 (für: Service Switching Point) über ein Protokoll INAP (Intelligent Network Application Protocol) mit einem Dienstesteuerungspunkt SCP (für: Service Control Point) kommuniziert und mit einem entfernten Vermittlungsknoten SSP 2 verbunden ist. Der Vermittlungsknoten ist herkömmlich über eine NNI(Network-Node-Interface)-Schnittstelle, also eine netzwerkinterne Schnittstelle, mit dem Dienstesteuerungspunkt SCP verbunden. Die NNI-Schnittstelle ist von hoher Komplexität und weist folgenden Protokollstack auf:
ATM - AAL5 - SSCOP - SSCF NNI - MTP-3b - SCCP - TCAP - INAP.

An die Vermittlungsknoten sind jeweils exemplarisch Teilnehmerendeinrichtungen TE1 beziehungsweise TE 2, die durch für Breitbanddienste geeignete Endgeräte gegeben sein mögen, angeschlossen. Eine Teilnehmerendeinrichtung ist über eine UNI(User-Network-Interface) -Schnittstelle mit dem Vermittlungsknoten verbunden. Die UNI-Schnittstelle weist folgenden Protokollstack auf:
ATM - AAL5 - SSCOP - SSCF UNI - Q.2931.

Ein Vermittlungsknoten weist eine als Block dargestellte Rufsteuerungsfunktion CCF (für: Call Control Funktion) und eine als Block dargestellte Dienstedurchschaltefunktion SSF (für: Service Switching Funktion) auf. Der Dienstesteuerungspunkt weist eine als Block dargestellte Dienstesteuerungsfunktion SCF (für: Service Control Funktion), die beispielsweise die Durchschaltung einer für die rufende Teilnehmerendeinrichtung gebührenfreien Verbindung bewirkt, auf. Eine an das Vermittlungsnetz angeschlossene Teilnehmerendeinrichtung vermag durch Abgabe von Wahlkennzeichen einen Intelligente-NetzeBreitbanddienst, wie zum Beispiel die Übermittlung einer Videosequenz in Echtzeit, anzuwählen. Der entfernte Vermittlungsknoten SSP 2 ist gleichartig zu dem lokalen Vermittlungsknoten SSP 1 aufgebaut, mit dem Unterschied, daß der Vermittlungsknoten SSP 2 keine unmittelbare Verbindung zu dem Dienstesteuerungspunkt SCP aufweist. Die mit dem Vermittlungsknoten SSP 2 verbundene Teilnehmerendeinrichtung TE 2 vermag über die Verbindung zwischen dem Vermittlungsknoten SSP 2 und dem Vermittlungsknoten SSP 1 einen Intelligente-Netze-Dienst in dem Dienstesteuerungspunkt SCP anwählen.

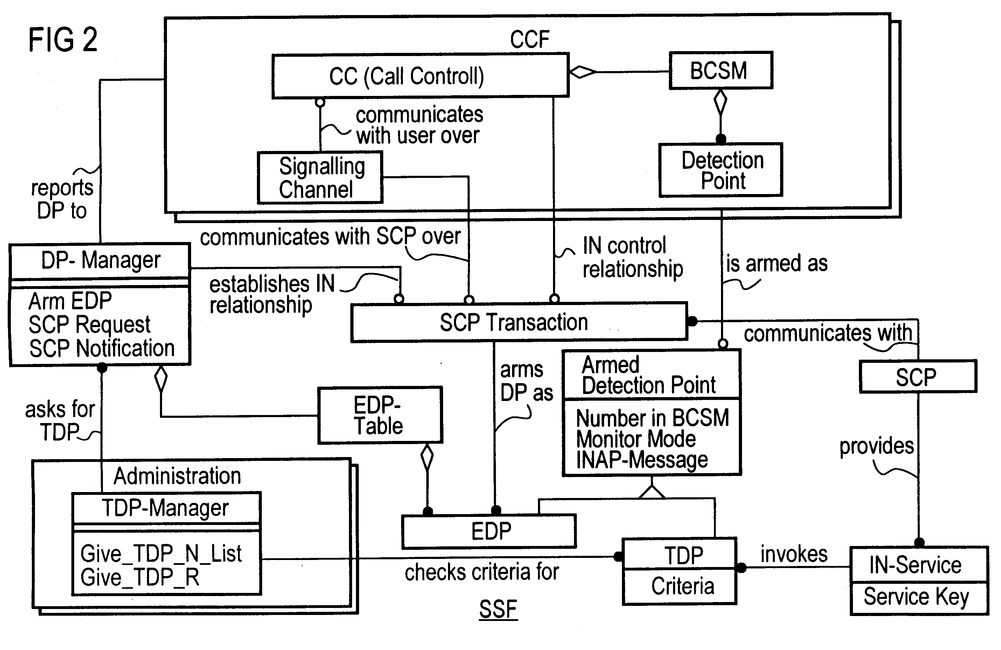

Das Objekt Diagramm nach Fig 2 verwendet die OMT (Objekt Modeling Technique) Notation nach Rumbaugh. Die Blöcke stellen im Sinne der objektorientierten Programmierung (OOP) Klassen dar, wobei die ohne Schatten dargestellten Klassen zu der Dienstedurchschaltefunktion SSF gehören und die mit Schatten dargestellten Klassen nicht zu der Dienstedurchschaltefunktion SSF gehören, jedoch mit der Dienstedurchschaltefunktion in Verbindung stehen.

Zu jedem Objekt Rufsteuerung CC (für: Call Control), das für einen Ruf steht, ist gemäß der ITU-T Recommendation Q. 1214 ein Basisrufzustandsmodell BCSM (für: Basic Call State Model), das Auffindungspunkte DP (für: Detection Points) aufweist, zugeordnet. Wird während eines Rufes ein Auffindungspunkt DP erreicht, informiert die Rufsteuerung CC eine Auffindungspunkt-Behandlungseinrichtung DP-M (für: Detection Point-Manager). Die Auffindungspunkt-Behandlungseinrichtung DP-M bestimmt, ob der betroffene Auffindungspunkt DP entweder als Ereignis-Auffindungspunkt EDP (für: Event Detektion Point)oder als Anstoß-Auffindungspunkt TDP (für: Trigger Detection Point) ausgestattet ist. Die Rufsteuerung CC kann selbst entscheiden, ob sie eine Beeinflussung des Rufes durch den Dienstesteuerungspunkt SCP durch Aufrufen der Methode 'Anfrage an den Dienstesteuerungspunkt' (SCP Request) in der Auffindungspunkt-Behandlungseinrichtung DP-M und Einnahme eines Wartezustandes zuläßt, oder ob lediglich durch Aufrufen der Methode 'Benachrichtigung des Dienstesteuerungspunktes' (SCP Notification) in der Auffindungspunkt-Behandlungseinrichtung DP-M eine Benachrichtigung an den Dienstesteuerungspunkt SCP gegeben werden kann. Im Falle einer Benachrichtigung an den Dienstesteuerungspunkt SCP kann die Rufsteuerung CC ohne Beeinflussung durch den Dienstesteuerungspunkt SCP mit der Rufbehandlung fortfahren. Bei diesem Ansatz macht es sich vorteilhaft bemerkbar, daß die Schnittstelle zwischen der Rufsteuerungsfunktion CCF und der Dienstedurchschaltefunktion SSF so klein wie möglich ist.

Die Auffindungspunkt-Behandlungseinrichtung DP-M behandelt die Auffindungspunkte DP im einzelnen. Zuerst fragt die Auffindungspunkt-Behandlungseinrichtung DP-M die AnstoßAuffindungspunkt-Behandlungseinrichtung TDP-M (für: Trigger Detection Point-Manager), ob ein bestimmter Auffindungspunkt DP als Anstoß-Auffindungspunkt TDP ausgestattet ist. Die Anstoß-Auffindungspunkt-Behandlungseinrichtung TDP-M prüft die Kriterien für einen Anstoß-Auffindungspunkt TDP und meldet sämtliche Anstoß-Auffindungspunkte TDP, die die Kriterien erfüllen, an die Auffindungspunkt-Behandlungseinrichtung DP-M. Die Kriterien sind durch die in der ITU-T Recommendation Q1214, Abschnitt 4.2.2.4. gegebenen Kriterien. Es ist zulässig mehrere Benachrichtigungs-Anstoß-Auffindungspunkte TDP-N (für: Trigger Detektion Point Notification) jedoch nur einen Anfrage-Anstoß-Auffindungspunkt TDP-R (für: Trigger Detection Point Request) zu melden. Darin, daß die Meldung nur eines Anfrage-Anstoß-Auffindungspunktes TDP-R zulässig ist, ist eine Beschränkung nicht zu sehen, weil gemäß der ITU-T Recommendation Q. 1214 nur eine Steuerungsbeziehung zwischen einem Ruf und dem Dienstesteuerungspunkt SCP zulässig ist.

Falls ein Anfrage-Anstoß-Auffindungspunkt TDP-R gemeldet wird und von der Rufsteuerung CC eine Anfrage erwartet wird, veranlaßt die Auffindungspunkt-Behandlungseinrichtung DP-M eine Intelligente Dienste-Steuerungsbeziehung (IN service control relationship) zwischen dem Ruf und einem Intelligenten Dienst (IN Service) durch Erstellen eines neuen Objekts Dienstesteuerungspunkt-Übertragung SCP-T (für: Service Control Point Transaction). Die als Ereignis-Auffindungspunkt EDP oder Anstoß-Auffindungspunkt TDP ausgestatteten Auffindungspunkte DP's, sogenannte Armed Detection Points, weisen sämtliche Informationen für eine Kommunikation mit dem Dienstesteuerungspunkt SCP auf; deshalb leitet die Auffindungspunkt-Behandlungseinrichtung DP-M das betreffende Objekt Anstoß-Auffindungspunkt zu dem Objekt Dienstesteuerungspunkt-Übertragung. Diese Informationen werden für einen Anstoß-Auffindungspunkt TDP durch eine Verwaltungseinrichtung (administration) in dem Vermittlungsknoten zur Verfügung gestellt.

Während einer Steuerungsbeziehung hat der Dienstesteuerungspunkt SCP die Möglichkeit Auffindungspunkte DP's als Ereignis-Auffindungspunkte EDP auszustatten. Aus Sicht der Rufsteuerung CC besteht kein Unterschied zwischen Ereignis-Auffindungspunkten EDP und Anstoß-Auffindungspunkten TDP, jedoch bestimmt die Auffindungspunkt-Behandlungseinrichtung DP-M, wie ein Auffindungspunkt DP ausgestattet ist. Die Information, daß ein Auffindungspunkt DP als Anstoß-Auffindungspunkt TDP ausgestattet ist, wird von der Anstoß-AuffindungspunktBehandlungseinrichtung TDP-M zur Verfügung gestellt. Die Information, daß ein Auffindungspunkt DP als Ereignis-Auffindungspunkt EDP ausgestattet ist, ist in einer Ereignis-Auffindungspunkt-Tabelle EDP-T (für: Event Detection Point Table) innerhalb der Auffindungspunkt-Behandlungseinrichtung DP-M lokal gespeichert. Das Objekt Dienstesteuerungspunkt-Übertragung (SCP Transaction) füllt die Ereignis-Auffindungspunkt-Tabelle EDP T durch Aufruf der Methode Ausstattung Ereignis-Auffindungspunkt in der Auffindungspunkt-Behandlungseinrichtung DP-M. Dieser Ansatz ist durch die Tatsache geprägt, daß Anstoß-Auffindungspunkte TDPs für sämtliche Rufe gültig sind und Ereignis-Auffindungspunkte EDPs auf einen konkreten Ruf bezogen sind.

Die Auffindungspunkte DP weisen also eine hierarchische Struktur auf. Die Auffindungspunkte DP sind als Informationsträger aufzufassen, mit welchem von möglicherweise mehreren Dienstesteuerungspunkten SCP eines Vermittlungsnetzes kommuniziert werden soll.

Die Auffindungspunkt-Behandlungseinrichtung DP-M ist also außerhalb der Rufsteuerungsfunktion CCF angeordnet. Bei der Erweiterung eines Vermittlungsknotens mit einer herkömmlichen Rufsteuerungsfunktion um die Funktionalität der anmeldungsgemäßen Fähigkeit zu Intelligenten Diensten beschränken sich also die Änderungen im wesentlichen darauf, der Auffindungspunkt-Behandlungseinrichtung DP-M das Erreichen bestimmter Auffindungspunkte DP zu melden und auf Anweisungen zu warten.

Für die Kommunikation des Dienste-Durchschaltpunktes SSP mit dem Dienstesteuerungspunkt SCP wird ein Signalisierungskanal benutzt. Die Kommunikation zwischen Dienste-Durchschaltpunkt SSP und Dienstesteuerungspunkt SCP erfolgt erfindungsgemäß in gleicher Weise wie die Kommunikation zwischen dem Dienste-Durchschaltpunkt SSP und einer Teilnehmerendeinrichtung TE. Dabei sind den beiden genannten Arten von Kommunikation in vorteilhafter Weise ein Großteil von Vorgehensweisen (Mechanismen), wie z. B. die Handhabung der Schicht 2 des Protokollstapels aus dem OSI 7-Schicht Modell, gemeinsam.

Beim Anmeldungsgegenstand wird zwischen Dienste-Durchschaltpunkte SSP und Dienstesteuerungspunkt SCP das INAP nicht über den NNI-Protokollstack, sondern über den UNI- Protokollstack transportiert. Dabei ist folgender Protokollstack gegeben:
ATM - AAL5 - SSCOP - SSCF UNI - INAP.

Eine unmittelbare Kommunikation zwischen Teilnehmerendeinrichtung und Dienstesteuerungspunkt SCP ist nicht gegeben.

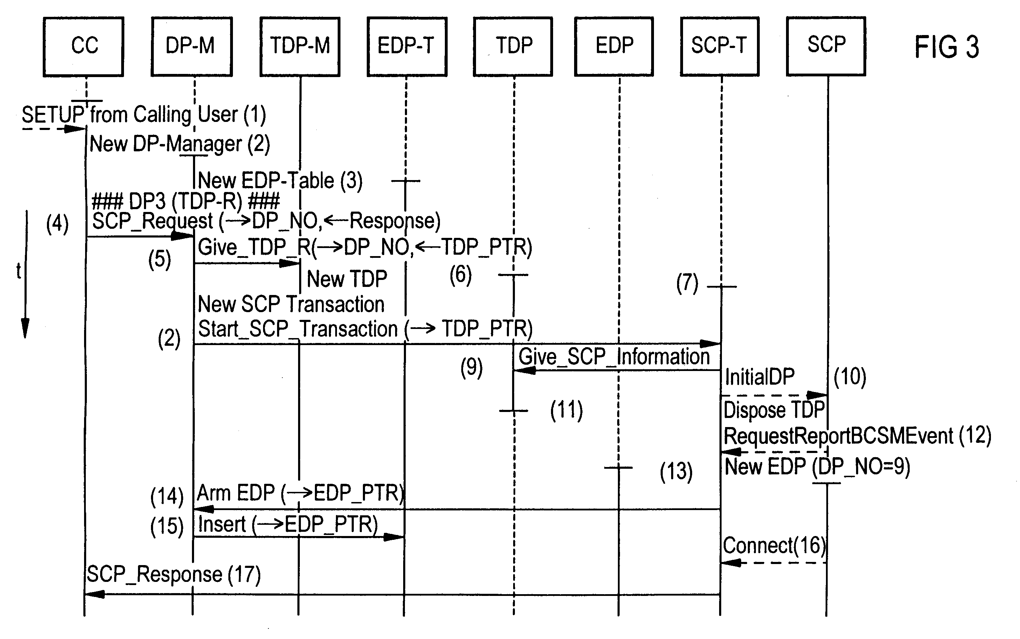

Fig 3 zeigt von oben nach unten zeitlich fortschreitend am Beispiel einer Anforderung eines Intelligente-Netze-Dienstes die Abläufe in den einzelnen Einheiten. Zum Punkt (1) tritt auf Anforderung beispielsweise der Teilnehmerendeinrichtung TE 1 die Teilnehmerendeinrichtung mit der Rufsteuerung CC in Verbindung. Zum Punkt (2) baut die Rufsteuerung eine neue Auffindungspunkt-Behandlungseinrichtung auf. Zum Zeitpunkt (3) wird eine neue Ereignis-Auffindungspunkt-Tabelle EDP-T aufgebaut. Zum Punkt (4) wird in der Rufsteuerung CC ein Anfrage-Anstoß-Auffindungspunkt TDP-R erreicht und der Auffindungspunkt-Behandlungseinrichtung DP-M eine Anforderung für den Dienstesteuerungspunkt SCP übermittelt. Zum Punkt (5) erfolgt die Anfrage und Meldung eines Anstoß-Auffindungspunktes TDP. Zum Punkt (6) wird ein neu aufgefundener Anstoß-Auffindungspunkt TDP in dem Anstoß-Auffindungspunkt-Behandlungseinrichtung DP-M eingetragen. Zum Punkt (7) wird in der Auffindungspunkt-Behandlungseinrichtung DP-M ein neues Objekt Dienstesteuerungspunkt-Übertragüng SCP-T zur Erzeugung einer Intelligente-Dienste-Steuerungsbeziehung zwischen dem Ruf und einem Intelligenten Dienst erstellt. Zum Punkt (8) tritt die Auffindungspunkt-Behandlungseinrichtung DP-M für einen Beginn der Dienstesteuerungspunkt-Übertragrnng mit der Einrichtung Dienstesteuerungspunkt-Übertragung SCP-T in Verbindung. Zum Punkt (9) leitet die Einrichtung Dienstesteuerungspunkt-Übertragrnng SCP-T dem Anstoß-Auffindungspunkt TDP dienstesteuerungspunkt-spezifische Informationen zu. Zum Punkt (10) wird von der Einrichtung Dienstesteuerungspunkt-Übertragung SCP-T an den Dienstesteuerungspunkt SCP der Auffindungspunkt DP gemeldet und damit initialisiert. Zum Punkt (11) wird der Anstoß-Auffindungspunkt DP verworfen, da seine Aufgabe erfüllt ist. Zum Punkt (12) erfolgt im Zuge einer Meldung von dem Dienstesteuerungspunkt SCP an die Einrichtung Dienstesteuerungspunkt-Übertragung SCP-T eine Anfrage zur Benachrichtigung über Ereignisse innerhalb des Basisrufzustandsmodells (RequestReportBCSMEvent). Zum Punkt (13) wird ein neuer Ereignis-Auffindungspunkt EDP eingerichtet. Zum Punkt (14) wird im Zuge einer Meldung von der Einrichtung Dienstesteuerungspunkt-Übertragung SCP-T an die Auffindungspunkt-Behandlungseinrichtung DP-M ein Auffindungspunkt DP als Ereignis-Auffindungspunkt EDP ausgestattet. Zum Punkt (15) trägt die Auffindungspunkt-Behandlungseinrichtung DP-M den Ereignis-Auffindungspunkt EDP die Ereignis-Auffindungspunkt-Tabelle EDP-T ein. Zum Punkt (16) erfolgt eine Auffordern des Dienstesteuerungspunktes SCP an die Einrichtung Dienstesteuerungspunkt-Übertragung SCP-T den betreffenden Ruf mit einer bestimmten Teilnehmerendeinrichtung zu verbinden. Zum Punkt (17) erfolgt eine Rückmeldung von der Einrichtung Dienstesteuerungspunkt-Übertragung SCP-T an die Rufsteuerung CC.

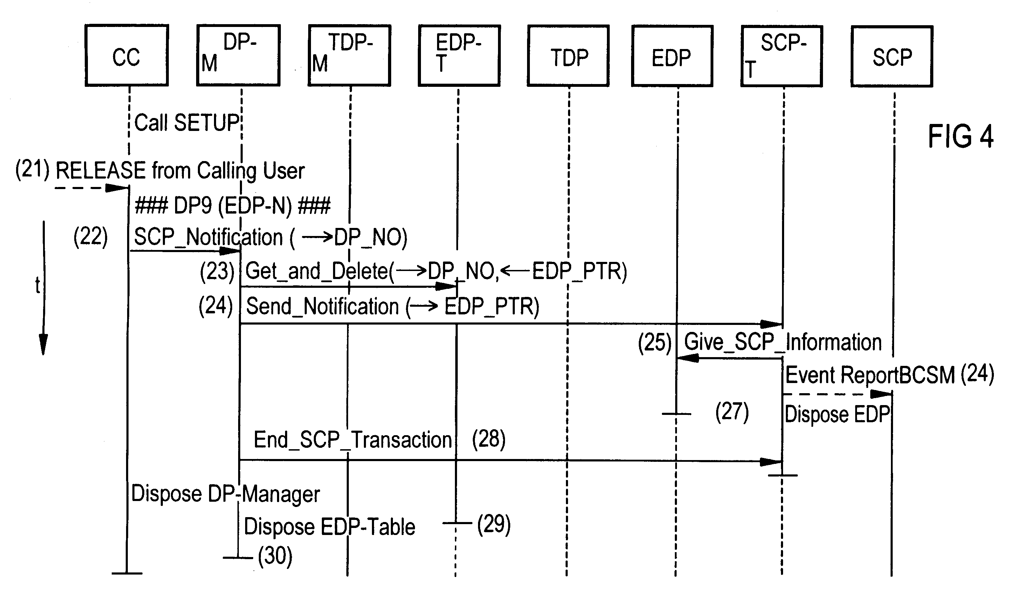

Fig 4 zeigt von oben nach unten zeitlich fortschreitend die Abläufe in den einzelnen Einheiten eines Intelligente-Dienste-Netzes am Beispiel einer durch eine Teilnehmerendeinrichtung ausgelösten Intelligente-Dienste-Verbindung. Zum Punkt (21) wird die bestehende Verbindung auf Veranlassung der Teilnehmerendeinrichtung ausgelöst. Zum Punkt (22) gibt die Einrichtung Rufsteuerung CC eine Meldung SCP_Notification an die Auffindungspunkt-Behandlungseinrichtung DP-M. Zum Punkt (23) sucht die Auffindungspunkt-Behandlungseinrichtung DP-M in der Ereignis-Auffindungspunkt-Tabelle EDP-T den entsprechenden Ereignis-Auffindungspunkt-Eintrag und löscht ihn gegebenenfalls (Get_and_Delete). Zum Punkt (24) gibt die Auffindungspunkt-Behandlungseinrichtung DP-M eine Meldung Hinweis (Send_Notification) an die Einrichtung Dienstesteuerungspunkt-Übertragung SCP-T. Zum Punkt (25) liest die Einrichtung Dienstesteuerungspunkt-Übertragung SCP-T Informationen über den Dienstesteuerungspunkt SCP aus der Einrichtung Ereignis-Auffindungspunkt EDP (Give_SCP_Information). Zum Punkt (26) schickt die Einrichtung Dienstesteuervngspunkt-Übertragung SCP-T eine Nachricht über die Erreichung eines Ereignis-Auffindungspunktes (EventReportBCSM) an den Dienstesteuerungspunkt SCP. Zum Punkt (27) wird der augenblicklich gültige Ereignis-Auffindungspunkt EDP verworfen. Zum Punkt (28) wird durch eine von der Auffindungspunkt-Behandlungseinrichtung DP-M an die Einrichtung Dienstesteuerungspunkt-Übertragung SCP-T gegebene Meldung (End_SCP_Transaction) die Beendigung des augenblicklich gültigen Objekts Dienstesteuerungspunkt-Übertragung (SCP_Transaction) eingeleitet. Zum Punkt (29) wird in der Einrichtung Ereignis-Auffindungspunkt-Tabelle EDP-T gelöscht und entfernt. Zum Punkt (30) wird die Einrichtung Auffindungspunkt-Behandlungseinrichtung DP-M gelöscht.

## Patentansprüche

1. Vermittlungssystem zur Anwahl eines Intelligente-Netze-Dienstes, insbesondere Breitbanddienstes, durch eine Teilnehmerendeinrichtung bei dem
- ein eine Rufsteuerungsfunktion (CCF) und eine Dienstedurchschaltefunktion (SSF) aufweisender Vermittlungsknoten (SSP) mit einem Dienstesteuerungspunkt (SCP), der eine einen Intelligenten Dienst realisierende Dienstesteuerungsfunktion (SCF) aufweist, verbunden ist
- eine Teilnehmerendeinrichtung über eine definierte Schnittstelle mit dem Vermittlungsknoten verbunden ist
**dadurch gekennzeichnet, daß**
die Schnittstelle zwischen Vermittlungsknoten und Dienstesteuerungspunkt gleichartig zu der Schnittstelle zwischen der Teilnehmerendeinrichtung und dem Vermittlungsknoten ist.

2. Vermittlungssystem nach Anspruch 1
**dadurch gekennzeichnet, daß**
der Nachrichtenaustausch zwischen dem Vermittlungsknoten und dem Dienstesteuerungspunkt unter Anwendung der gleichen Protokolle erfolgt wie bei einem Nachrichtenaustausch zwischen dem Vermittlungsknoten und der Teilnehmerendeinrichtung.

3. Vermittlungssystem nach Anspruch 2
**dadurch gekennzeichnet, daß**
der Nachrichtenaustausch unter Anwendung der Schicht 2 des Protokollstapels aus dem OSI 7-Schicht Modell erfolgt.
